# EUROPEAN PATENT APPLICATION

(11) **EP 0 535 701 A1**
(43) Date of publication of application: **07.04.1993**
(21) Application number: 92116915.7
(22) Date of filing: 02.10.1992
(51) Int. Cl.: G06F 12/08

(54) **Architecture and method for combining static cache memory and dynamic main memory on the same chip (CDRAM)**

(30) Priority: 03.10.1991 US 770641
(71) Applicant: STANDARD MICROSYSTEMS CORPORATION, Hauppauge, New York 11788 (US)
(72) Inventor: Wanlass, Frank M., Sunnyvale, California 94087 (US)
(74) Representative: Blumbach, Kramer & Partner

(57) **Abstract**

An embodiment of the present invention is a 1,024 by 1,024 DRAM (77) integrated with a 1,024 by one SRAM (61). The SRAM (61) contents can be directly addressed by external memory accesses and will services data transfers much faster than the DRAM (77) could. The SRAM carries 64 lines of 16-bits (63) of DRAM data. When an external write or read addresses a line of DRAM (77) not in the SRAM (61), the SRAM (61) flushes a line to update a previously cached line of DRAM (77), and then downloads a line of DRAM that contains a currently requested data bit.

## Description

### BACKGROUND OF THE INVENTION

### Field of the Invention

The invention relates generally to integrated semiconductor memory circuits, and more particularly to combining DRAM and Cache SRAM on a single integrated circuit chip (hereinafter referred to as a Caching DRAM (CDRAM)).

### Description of the Prior Art

Conventional memory systems are usually implemented with dynamic RAMS (DRAMs), because such devices provide a lot of memory storage for a relatively small cost and require a small amount of PC board "real estate". Even though DRAM memories have increased in speed and now have cycle times of about 150 nanoseconds, they have not kept pace with the higher speeds of their contemporary microprocessors, which can have cycle times lower than 40 nanoseconds (nanoseconds). To improve system performance while maintaining reasonable cost, system designers have frequently turned to using cache memory, which is a very fast memory made from relatively expensive Static RAMs (SRAMs). The SRAMs can be configured to have cycle times of under twenty nanoseconds.

Cache memory fits into a system between the microprocessor and the main DRAM memory. System operation speeds are improved by allowing the cache memory to hold copies of code and data that are likely to be requested by the microprocessor from the main DRAM memory. Since cache memory is so expensive on a cost per bit basis, compared to DRAM, economics usually only permit a very small amount of cache SRAM memory to be used. Even so, using only a small cache memory will still greatly improve system performance. Its worth is demonstrated in all the recently introduced high performance personal computers and workstations that use it. The price per bit of DRAMs has now dropped so low, that the cost of a small SRAM type cache memory subsystem exceeds the cost of a large main memory comprised of DRAM.

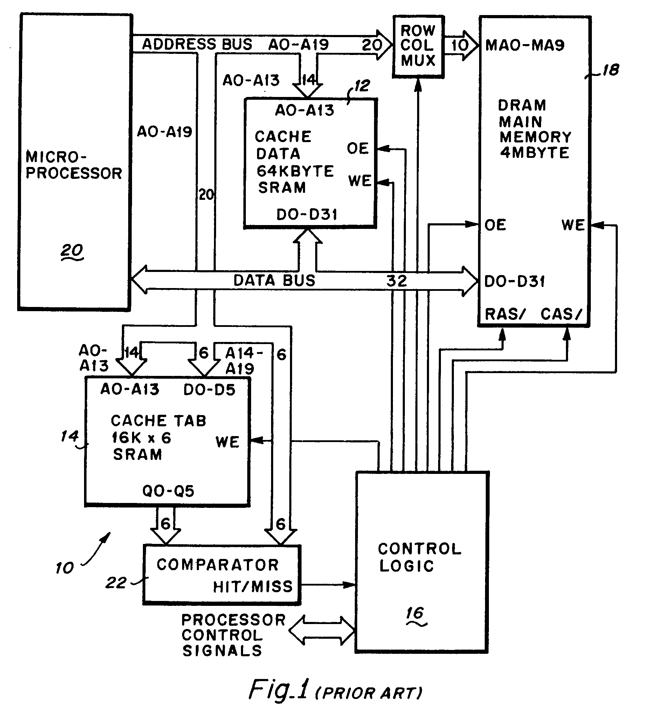

In Fig. 1, an exemplary prior art cache-based system 10 comprises a data cache 12, tag cache 14, and control logic 16. The two caches 12 and 14 comprise high speed SRAM. Data cache 12 keeps copies of data and/or CPU instructions that are predicted to be frequently or near immediately requested by a microprocessor. Data cache 12 is typically small, and can only hold thousands of the millions of data and/or instructions that are in a DRAM memory 18. It is critical in system ten to make a quick determination during program and data fetching if a particular byte or word is available quicker from data cache 12 than it word be from DRAM memory 18. To keep track of which memory addresses have been copied into data cache 12 from DRAM 18, a part of each of the DRAM 18 memory address corresponding to data in data cache 12 is stored in tag cache 14. When a microprocessor 20 addresses DRAM 18, the memory request is intercepted by the cache subsystem comprised of caches 12 and 14 and control logic 16. The address of the memory request is compared by a comparator 22 to those stored in tag cache 14. If a requested memory address matches any of the addresses stored in tag cache 14, the cache subsystem supplies the information from data cache 12 much quicker than the DRAM memory could have otherwise. A DRAM 18 access is thus unnecessary, and the access cycle to DRAM 18 cut short to allow other DRAM 18 memory requests.

If the address of a memory request does not match one of the address entries in tag cache 14, the memory request is simply allowed to be handled by DRAM 18. When the information requested is eventually returned from the DRAM 18 to the microprocessor, a copy of it can be easily made and stored in data cache 12. Its address is kept in tag cache 14 for future use.

System 10 is a four megabyte (one megaword) example of a prior art configuration. Many variations of this basic theme are possible. In system 10, data cache 12 holds only 64K bytes (16K words) out of the total of four megabytes that can be stored in the DRAM 18. The one megaword by 32-bit wide DRAM 18 memory array requires twenty address leads, labeled here as A0-A19, so that all locations can be addressed, (2²⁰ = 1,048,576). The sixteen kiloword by 32 bit wide data cache 12 is addressed by the lower A0-A13 bits of the address bus, (2¹⁴ = 16,384). Tag cache 14 is sixteen kilowords by six bits wide, and is also addressed by A0-A13. The six bit words it stores are addresses A14-A19, which are stored as the tag bits.

System 10 is of a type commonly identified as a direct mapped cache. For every set of lower address bits, A0-A13, there is only one set of upper address bits, A14-A19, and those are stored as a tag in tag cache 14.

A cache system reduces the average memory access time because it stores code and data the microprocessor has been actually using, and it stores code and data the microprocessor is predicted to need. This second feature is the key to a successful cache, as explained by the "locality of reference" principle, which was developed by watching how programs actually behave. The principle has two essential parts,
spatial locality--programs usually request data or instructions near addresses which have already been accessed; and
temporal locality--programs tend to repeat the use of newer information. The older the information is, the less likely a program will request it.

When code or data is requested by a microprocessor and is not in a cache, a cache "miss" is said to have occurred. Such misses can cause the cache to request several additional, neighboring bytes of code or data from main memory, not only just the code or data that was requested by the microprocessor. Such groups of memory are often called a "line" of information. They are also sometimes referred to as pages of memory with the address on A14-A19 identifying particular page numbers. Cache tag 14 therefore stores a list of page numbers that are presently in data cache. A line can be defined here as being a string of bytes that are moved as a group from main DRAM memory to the cache when the cache is updated. It is, at a minimum, the number of bytes that can transferred in parallel across a data bus. For example, even though a single byte may have been requested, it makes for good cache management to request and store the whole of a 32-bit word that contains that byte. Many personal computer systems now have 32-bit data busses, and yet byte operations are common, especially in communications I/O.

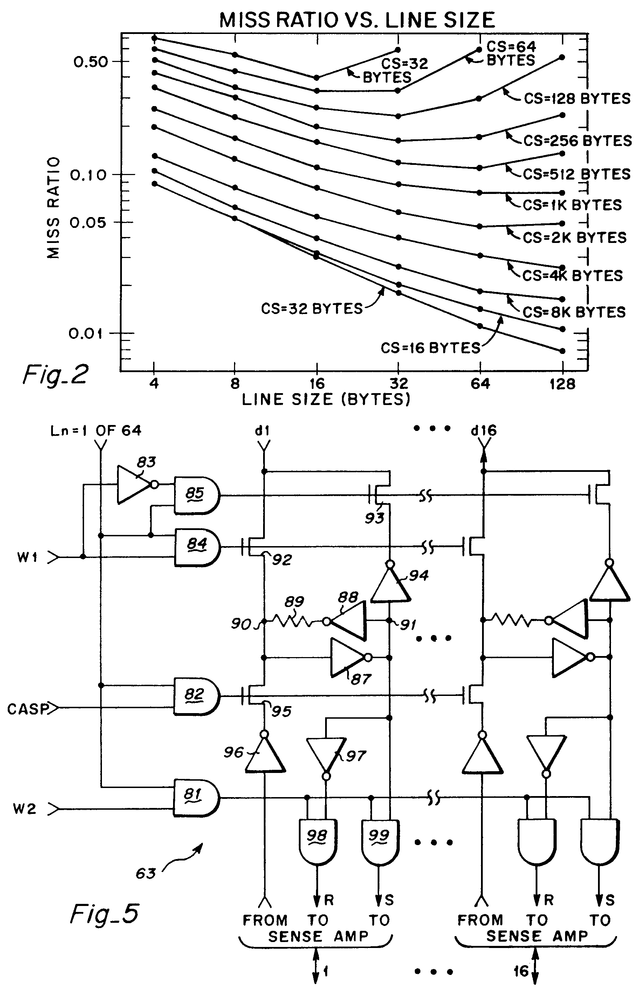

Fig. 2 is similar to one found in a widely distributed Intel (Santa Clara, CA) publication. Cache sizes of 32, 64, 128, 256, 512, 1K, 2K, 4K, 8K, 16K, and 32K bytes are plotted against line sizes of 4, 8, 16, 32, 64, and 128 bytes. It shows generally that the larger the line size, the better will be cache performance, as measured by the miss ratio (fewer misses being better). But, a 4K byte cache memory with a line size of 64 bytes has a lower miss rate than a 32K byte memory with a line size of eight bytes. Line size cannot be expanded freely. Increasing line sizes must be traded off with other system factors. If the line size were to exceed a system's data bus width, which in most personal computers is four bytes, then multiple DRAM memory accesses will be required. And during those accesses, the processor would have to wait. Therefore, present system line sizes are usually much smaller than 64 bytes.

There are many other organizational details that affect a cache's performance that are not mentioned here. For more information on this subject, the reader is referred to, Alan Jay Smith, "Line (Block) Size Choice for CPU cache Memories", IEEE Transactions On Computers, Vol. C-36, No. 9, September 1987.

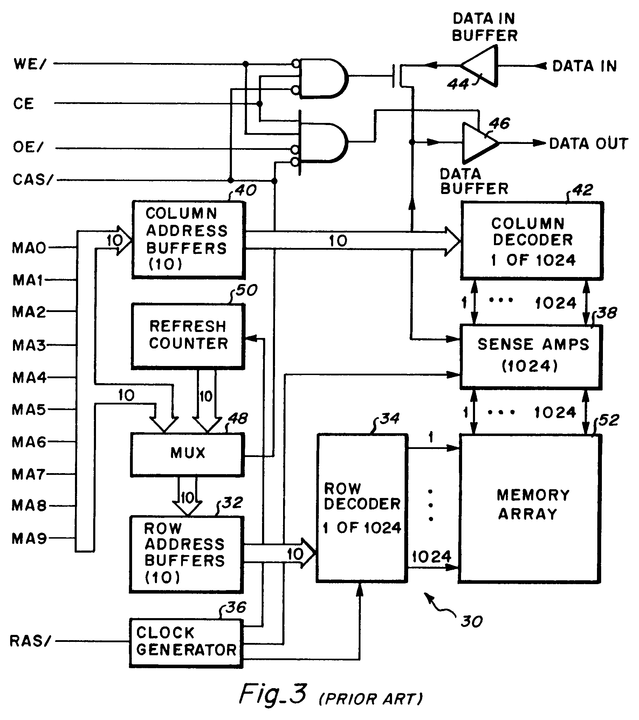

Fig. 3 diagrams a typical, conventional one megabit static column DRAM memory chip 30. It is has 1,048,576 one-bit words, and is organized as 1,024 rows by 1,024 columns in an array. The "static column" term means this is a type of DRAM that has a faster data accesses if only the column addresses change between access cycles. A DRAM subsystem that uses 32 such chips is required for a four megabyte memory configuration (organized as 1M x 32). A microprocessor addressing such a memory will need twenty address leads (e.g., A0-A19). It has become the customary practice, as shown in Fig. 1, to time multiplex the DRAM 18 addresses so that only ten address leads, labelled MA0-MA9, are needed to address the DRAM 18 subsystem. (The custom developed because more leads meant higher costs and wasted board space, and access times were slow enough to accommodate the multiplexing of the address.) The multiplexing is such that a first cycle transfers row addresses A10 through A19, and then a second cycle transfers column address A0 through A9. On the falling edge of a RAS/ signal, MA0 through MA9 are required have valid representations of addresses A10 through A19. (RAS/ = row address strobe, low-true.) This first group is latched into a ten bit row address buffer 32. The outputs of the buffer go to a row decoder 34 that selects, after a short delay determined by a clock generator 36, one of the 1,024 row lines that should go high. All 1,024 bits connected to this particular row line will then be connected to a 1,024 sense amplifiers 38 (assuming a 1,024 row by 1,024 column organization). The sense amplifiers 38 read and boost the logic levels of the bits, and in the process refresh each of the bits to overcome any charge leakage that would erase the bit before the next refresh. The sense amplifiers 38 use a timing signal supplied by the clock generator 36.

When a CAS/ signal goes low, typically about twenty nanoseconds after RAS/ goes low, the logic levels on MA0 through MA9 representing address A0-A9 must be valid and are received by a column address buffer 40. These are coupled directly to a column decoder 42. (CAS/ = column address strobe, low-true.) The column decoder 42 selects one of the 1,024 sense amplifiers 38 to connect with data input/output buffers 44 and 46. When CAS/ goes low, a multiplexor (MUX) 48 switches the inputs to the row address buffer 32 from the external address to the refresh counter address 50. If CAS/ and OE/ are low, and if CE and WE/ are high, the output buffer 46 will be activated. Data from the selected sense amplifier 38 can be output. If WE/ goes low, the output buffer 46 will be tri-stated. The input buffer 44 output is sent to the selected sense amplifier 38, and overwrites its previous state. The sense amplifier 38 transmits this data to the bit in array 52 that it is connected to by the previously selected row line. The other sense amplifiers 38 remain unchanged. If an access to another bit on the same row is to be made, the address on MA0 through MA9 can be changed without recycling RAS/ or CAS/. However, if a write was in progress when WE/ is low, WE/ must be returned high before addresses on MA0-MA9 or the data input can be changed. WE/ can then go low again after making any data or address changes, if another write access is needed. Refresh counter 50 allows a "hidden refresh" of a new row to occur every time RAS/ cycles from low to high to low, while CAS/ is being held low. Each such RAS/ cycle will advance the refresh counter 50 to a next new row address. The data output buffer 46 is tri-stated during hidden refresh by holding OE/ high. This avoids making a spurious data output.

Therefore, a memory device with a wide cache line width is needed that has the access times of SRAM and the low cost and high density of DRAM.

### SUMMARY OF THE PRESENT INVENTION

It is the object of the present invention to provide architecture, logic, and circuit techniques to combine high speed data cache SRAM with high density DRAM on the same chip.

Briefly, one embodiment of the present invention is a 1,024 by 1,024 DRAM integrated with a 1,024 by one SRAM. The SRAM contents can be directly addressed by external memory accesses and will service data transfers much faster than the DRAM could. The SRAM carries 64 lines of 16-bits each of DRAM data. When an external write or read addresses a line of DRAM not in the SRAM, the SRAM flushes a line to update a previously cached line of DRAM, and then downloads a line of DRAM that contains a currently requested data bit.

An advantage of the present invention is that wide cache lines are possible, thus making for high performance cache with relatively small cache tag storage.

Another advantage of the present invention is that the SRAM data cache is located on the same chip as DRAM.

These and other objects and advantages of the present invention will no doubt become obvious to those of ordinary skill in the art after having read the following detailed description of the preferred embodiments which are illustrated in the various drawing figures.

### IN THE DRAWINGS

Fig. 1 is a block diagram of a prior art four megabyte cache-based system;
Fig. 2 is a graph of miss ratio versus line sizes;
Fig. 3 is a block diagram of a prior art one megabit static column DRAM chip;
Fig. 4 is a block diagram of a CDRAM chip according to a first embodiment of the present invention;
Fig. 5 is a circuit diagram of of a 16-bit SRAM line from the CDRAM chip of Fig. 4;
Fig. 6 is a block diagram of a four megabyte cache-based system comprising the CDRAM chip of Fig. 4;
Fig. 7 is a block diagram of a CDRAM according to a second embodiment of the present invention;
Fig. 8 is a circuit diagram of of a 8 x 16 SRAM block from the CDRAM chip of Fig. 7;
Fig. 9 is a block diagram of a four megabyte cache-based system comprising the CDRAM chip of Fig. 7; and
Fig. 10 is a block diagram of a two way set associative four megabyte CDRAM system according to a third embodiment of the present invention.

### DETAILED DESCRIPTION OF THE EMBODIMENTS

### First Embodiment

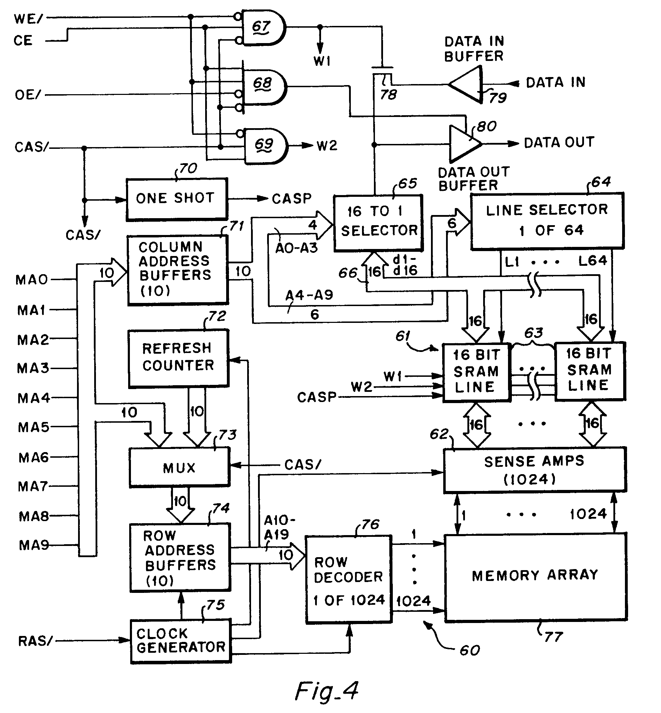

Fig. 4 is a first embodiment of the present invention, which is a CDRAM chip 60 organized as one megabit by one (1M x 1). CDRAM chip 60 preferably has the same number of chip leads as an industry standard one megabit DRAM. CDRAM chip 60 differs from prior art DRAMs in that there is a row 61 of 1,024 SRAM bits between sense amplifiers 62 and I/O circuitry. The memory bits are organized into sixty-four "lines" of 16-bits each (16 x 64 = 1,024). One line is selected at a time.

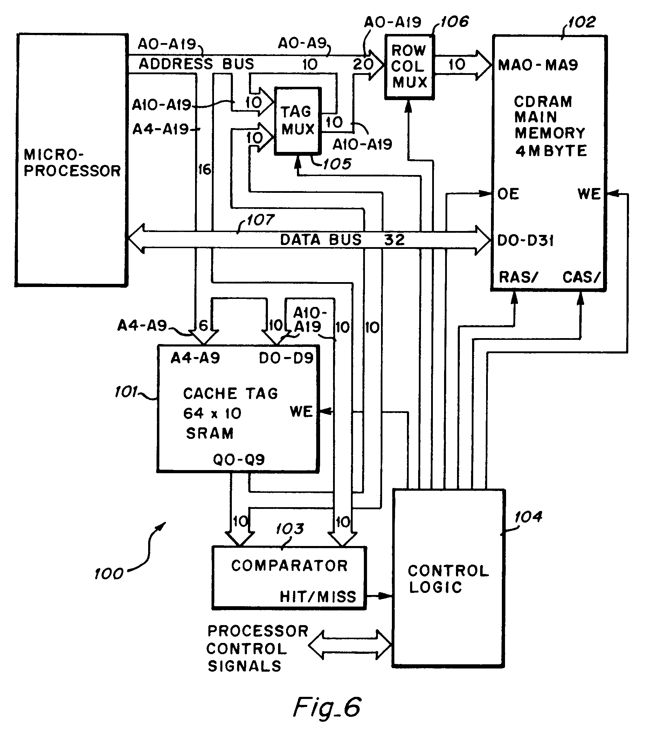

A 16-bit SRAM line 63 is shown in Fig. 5. This diagram is exemplary only, and is presented here merely to clarify the logic operation required of a line. Each line 63 must:
read data from its sixteen associated sense amplifiers when a signal labelled CASP goes high;
write data to its sixteen associated sense amplifiers when a signal labelled W2 goes high; and
read data from the Data Input Buffer when a signal labelled WI goes high, into the selected one of its 16-bits.

A line selector 64 (Fig. 4) has only one of its outputs, L1 through L64, high at any one time, in order to select only one of the sixty-four SRAM lines. The inputs to line selector 64 include six address inputs, labelled A4-A9. Sixteen outputs of each of the sixty-four lines of SRAM are bussed together into a 16-bit data bus 66, which passes through a 16:1 selector 65 to the I/O circuitry. The 16:1 selector 65 is controlled by four address inputs A0-A3, and its function is similar to sixteen MOS bidirectional pass gates, where only one gate is turned on at a time to connect one of the sixteen data bits to the I/O circuitry. A group of three AND-gates 67, 68, and 69, and a one-shot 70 generate the following special control signals:
AND-gate 67 generates a positive W1 signal when CAS/ is low, CE is high and WE/ goes low. Signal W1 is used to write data in to a selected bit in the selected SRAM line;
AND-gate 68 activates the tri-state output buffer when WE/ is high, CE is high, OE/ is low and CAS/ is low;
AND-gate 69 generates a positive W2 signal when CAS/ is high, CE is high and WE/ goes low. Signal W2 is used to read a selected SRAM line to its sixteen sense amplifiers; and
one-shot 70 generates a positive pulse signal labelled CASP that starts when CAS/ goes low. CASP stays up about ten to twenty nanoseconds. Signal CASP is used to read sixteen sense amplifiers 62 to a selected SRAM line.

A set of column address buffers 71 supplies addresses to selectors 64 and 65. A refresh counter 72 drives one port of a MUX 73. The output of MUX 73 forms the input to a set of row address buffers 74 along with a clock from a clock generator 75. A row decoder 76 receives encoded row addresses from row address buffers 74.

In Fig. 5, a group of gates 81 through 85 are shared for an entire line. Various other gates and transistors are repeated sixteen more times. A pair of cross-coupled inverters 87 and 88 and a resistor 89 make up an SRAM-type storage cell for one bit. A node 90 is at the input to the SRAM storage cell. The output is at a node 91. Resistor 89 has a rather large value, about 100 kilohm, so that a bit can be easily written into the storage cell when either of data transfer transistors 92 or 95 is turned on. Resistor 89 can be made from an MOS device with a suitable L/W ratio. The SRAM bit output, at node 91, is buffered by an inverter 94, before its being bussed off chip. A transistor 95 is controlled by gate 82 and steers data from the sense amplifiers to the SRAM storage cell. A group of gates 97, 98 and 99 buffer the bit to sense amplifiers 62.

Referring to Fig. 4, on the falling edge of RAS/, addresses on MA0-MA9 are latched into row address buffers 74, whose outputs go to the row decoder 76. After a short time, as controlled by clock generator 75, row decoder 76 will have one of its 1,024 outputs go high. All of the 1,024 bits connected to the selected row will be connected to the 1,024 sense amplifiers 62, which sense the logic levels of the bits, and refresh each of the bits to compensate for any charge leakage. The sense amplifiers 62 require a timing signal that is supplied, as shown, by the clock generator 75. On the falling edge of CAS/, which is about twenty nanoseconds after RAS/ goes low, the address inputs on MA0-MA9 are equal to A0-A9, and a positive pulse CASP is generated by one-shot 70. In Fig. 5, this causes AND-gate 82 of the selected 16-bit SRAM line 63 to have a positive output. This turns on transistor 95 and the line reads the outputs of its sixteen associated sense amplifiers 62, and the previous contents of the selected 16-bits of SRAM are overwritten. CASP will normally last only a very short time, about ten to twenty nanoseconds, and during this time the address inputs should not change. This activity corresponds to a prior art transferring a line of DRAM to cache. Even though the line here is only 16-bits, if a CDRAM chip 60 (Fig. 6) has 32 such chips working in parallel, then sixty-four bytes (16 x 32/8 = 64) will actually be transferred.

Referring now to a system 100 in Fig. 6, when a selected line of 16-bits is transferred from the sense amplifiers 62 to the SRAM lines 63, an external tag memory 101 will also have to be updated to store the row address, A10-A19, that represent where the line has come from. The tag memory 101 need only be a very small 640-bit SRAM that stores a 10-bit address for each of sixty-four lines. As shown in Fig. 6, cache tag 101 will preferably have a 6-bit address input, A4-A9, a 10-bit data output, Q0-Q9, and a 10-bit data input D0-D9. This same tag memory 101 can be shared by all 32 CDRAM chip chips 40 that make up a four megabyte memory array 102.

In any CDRAM chip 60, while CAS/ is low, any of the 1,024 SRAM bits can be read by manipulation of line selectors 64 and 65. These selectors are controlled by addresses A0-A9. However, before reading one of the bits, the line address A4-A9 must be used to address one of sixty-four 10-bit locations in a tag memory 101. The tag memory 101 outputs, Q0-Q9, are compared to a current address on address lines A10-A19 by a comparator 103. If these match, a "hit" is registered, and control logic will output enable (OE) CDRAM chip 60 onto a 32-bit system data bus. Overall, this results in a very short read access time.

If tag memory 101 outputs Q0-Q9 do not match addresses on A10-A19, then there is a read "miss". The contents of the SRAM must then be flushed to the previously cached line of DRAM before the SRAM line can be reassigned to the line here that was accessed and caused the miss. The flush is required because any write hits that occurred on the line resulted in new data in the SRAM line that is not yet reflected in the DRAM. In other words, writes are all cached and not written through. An external control logic 104 makes CAS/ and RAS/ go high, a tag MUX 105 selects tag memory 101 output to be steered to a row/column MUX 106, and a row/column MUX 106 is toggled to select rows. Then RAS/ goes low, and a 1,024 bit row of CDRAM chip 60 is selected, as determined by the tag cache 101 outputs on Q0-Q9. After a short time, sense amplifiers 62 have at their outputs the selected row data. Then WE/ goes low, which according to the logic shown in Fig. 4, will make W2 go high, when CAS/ is high. SRAM line 63 logic is such that when signal W2 goes high, the SRAM line 63, as determined by A4-A9, writes its 16-bits to the associated 16-bits of sense amplifier 62. These, in turn, write their respective data into the bits of a row selected by Q0-Q9. Next, RAS/ goes high, the tag MUX 105 selects the current A10-A19 to go to row/column MUX 106, and row/column MUX 106 is toggled to select rows. Then RAS/ goes low again, and a row of CDRAM chip 60 is selected by A10-A19 to be fed to sense amplifiers 62. About twenty nanoseconds after RAS/ goes low, CAS/ will also go low, and transfer 16-bits of data to the SRAM line 63 determined by A4-A9. And lastly, the desired CDRAM chip 60 output is enabled as one bit onto an external 32-bit bus 107. All of this takes about two normal DRAM cycles, and is much slower than for a read hit. However, with thirty-two chips working in parallel sixty-four bytes of SRAM have been written to DRAM, and sixty-four bytes of DRAM have been written to SRAM. Prior art systems would require 32 DRAM cycles to accomplish the same transfer.

In CDRAM chip 60, while CAS/ is low, any of the 1,024 SRAM bits can be written to using the line selector 64, and the 16:1 selector 65. These selectors respond to the addresses on MA0-MA9. Before writing one of these bits, the line address A4-A9 must be sent to tag memory 101. Then, tag memory 101 output, Q0-Q9, will be compared to the current address A10-A19. If these match there is a write "hit", and this will be detected by the control logic 104, which will cause WE/ to go low, causing W1 to go high, which turns on transistor 78 (Fig. 4). Transistor 92 (Fig. 5) turns on and transistor 93 turns off. Only one of the data lines D1 through D16 will be at a low impedance, as determined by the 16:1 selector 65, and it will be this line that will write input data to the selected SRAM bit. This will be a very short write access time.

When attempting to write, if tag memory 101 outputs Q0-Q9 do not match A10-A19, then there is a write "miss". The contents of the SRAM must then be flushed to the previously cached line of DRAM before the SRAM line can be reassigned to the line here that was accessed that caused the miss. (The previously cached line is identified by its A10-A19 modulo address that is stored in cache tag 101.) For a write miss, the external control logic 104 is such that CAS/ and RAS/ will go high, tag MUX 105 selects tag memory 101 output to go to row/column MUX 106, and row/column MUX 106 is toggled to select rows. Tag memory 101 output must go to row/column MUX 106 so that the SRAM flush is sent to the previously cached line. The current address on A10-A19 will be used to create the new line of cache once the old line is out of the way. Then RAS/ goes low and a 1,024 bit row of CDRAM chip 60 is selected as determined by the tag output Q0-Q9, and after a short time sense amplifiers 62 have at their outputs the selected row data. Then WE/ goes low, which according to the logic shown in Fig. 4, which will make W2 go high, when CAS/ is high. When W2 goes high, each SRAM line 63, as determined by A4-A9, writes its 16-bits to the associated 16-bits of sense amplifier 62, which, in turn, will write their data into the bits of the row selected by Q0-Q9. Next RAS/ goes high, the tag MUX 105 selects the current A10-A19 to go to row/column MUX 106, and row/column MUX 106 is toggled to select rows. Then RAS/ goes low again, and a row of CDRAM chip 60 is selected by A10-A19 to be fed to sense amplifiers 62. About twenty nanoseconds after RAS/ goes low, CAS/ will go low and transfer 16-bits of data to the SRAM line determined by A4-A9. After a short wait, the WE/ signal can be driven low and the data input can be written to the bit selected by A0-A9. Again, all this takes about 2 DRAM cycles, but sixty-four bytes have been transferred twice, because thirty-two CDRAM chips are working in parallel.

System 100 has 4,096 bytes (1,024 words x 32 bits) of data cache SRAM, and transfers lines of sixty-four bytes. According to the chart in Fig. 2, this system using CDRAM chip 60 can be expected to have a hit rate equivalent to a prior art memory system with a data cache of 32,768 bytes, and a line width of four bytes.

### Second Embodiment

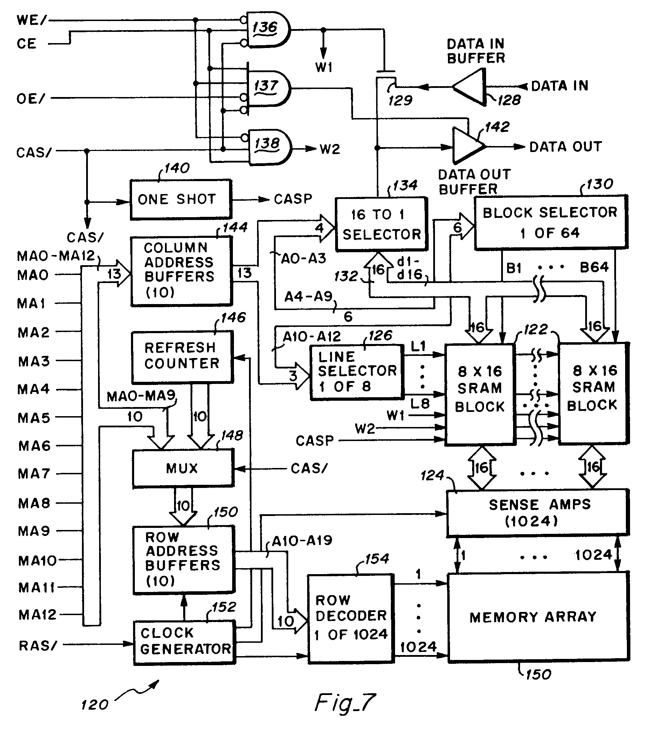

Fig. 7 is a second, more complex embodiment of the present invention. A one megabit by one (1M x 1) CDRAM chip 120 has eight times more SRAM storage than CDRAM chip 60, and has three more address input leads, which are labelled MA10-MA12. CDRAM chip 120 has sixty-four blocks 122 of eight by sixteen (8 x 16) SRAM bits between sense amplifiers 124 and its I/O circuitry. Data input is received by a buffer 128 and passed through a transistor 129. A line selector 126 chooses which of eight lines to enable in SRAM blocks 122. Each block 122 is organized into eight lines of 16-bits each. One block 122 and one line are selected at any one time. A block selector 130 allows only one of its outputs, B1-B64, to be high at any one time. This is in order to select only one of the sixty-four SRAM blocks 122. The inputs to block selector 130 comprise six address inputs A4-A9. Line selector 126 has only one of its outputs, L1-L8, high at a time. The inputs to line selector 126 comprise three address inputs A10-A12. It takes a combination of block selection and line selection to single out one of 512 lines (8 x 64 = 512). The sixteen outputs of the selected line are coupled to a 16-bit data bus 132, which goes through a 16:1 selector 134 and then on to the I/O circuitry. Selector 134 is manipulated by addresses on the four inputs A0-A3. Only one the sixteen data lines will be coupled through to the I/O circuitry.

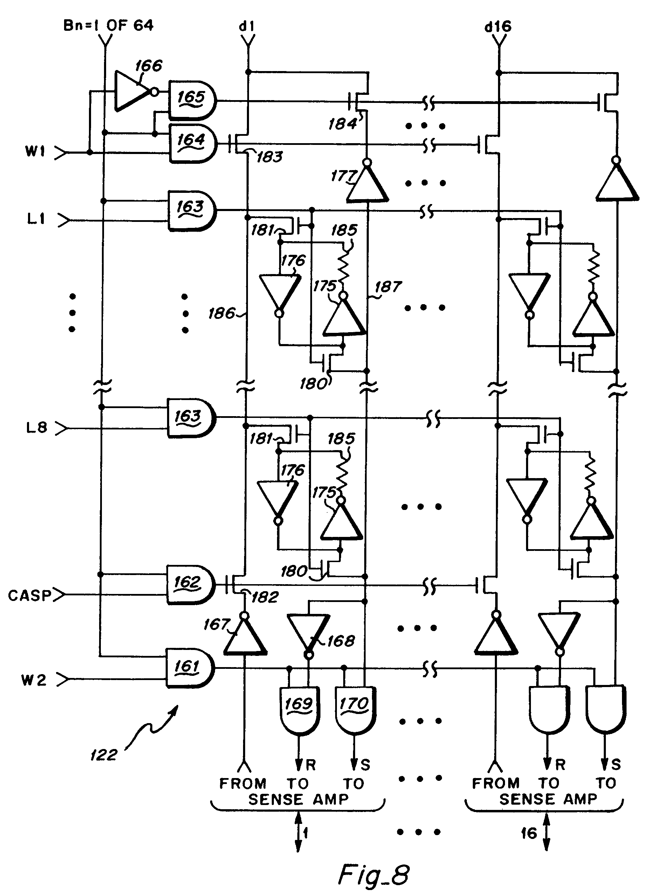

An exemplary implementation of SRAM block 122 is detailed in Fig. 8. It is shown here only to help explain the logic operations required of a block 122, which are to:
read data from its sixteen associated sense amplifiers 124, when CASP goes high, into one-of-eight selected lines, as selected by line selector 126;
write data to its sixteen associated sense amplifiers 124 when W2 goes high, from one-of-eight selected lines; and
read data from the data input buffer 128 when W1 goes high, into one of 16-bits of the selected line.

In Fig. 7, a set of three AND-gates 136, 137, and 138, and a one-shot 140 generate special control signals. AND-gate 136 generates a positive W1 signal when CAS/ is low, CE is high and WE/ goes low. AND-gate 137 activates a tri-state output buffer 142 when WE/ is high, CE is high, OE/ is low and CAS/ is low. AND-gate 138 generates a positive W2 signal when CAS/ is high, CE is high and WE/ goes low. One-shot 140 generates a positive pulse CASP that starts when CAS/ goes low, and lasts about ten to twenty nanoseconds. W1 is used to write data into the selected bit in the selected SRAM line. W2 is used to read a selected SRAM line to its sixteen sense amplifiers 124. CASP is used to read sixteen sense amplifiers 124 to a selected SRAM line.

A set of column address buffers 144 supplies addresses to selectors 126, 130, and 134. A refresh counter 146 drives one port of a MUX 148. The output of MUX 148 forms the input to a set of row address buffers 150 along with a clock from a clock generator 152. A row decoder 154 receives encoded row addresses from row address buffers 150.

In Fig. 8 gates 161-166 are shared for the entire block 122. AND-gate 163 is repeated eight times. A network of gates 167-170, transistors 182-184, and inverter 177 are repeated sixteen times. Cross-coupled inverters 175 and 176, resistor 185 and access transistors 180 and 181 make up an SRAM storage cell for one bit of data. These bits are repeated 128 times (8 x 16 = 128) for each SRAM block 122. A node 186 is a common input node for eight bits, and is repeated sixteen times. Node 187 is a common output node for eight bits, and is also repeated sixteen times. Resistor 185 is a rather large value, about 100 kilohm, so that a bit can be easily written into the SRAM cell, when selected. The node 187 output of eight bits is buffered by inverter 177 before being bussed off chip, and by gates 168, 169 and 170 before going to sense amplifiers 124.

On a falling edge of RAS/, addresses A0-A9 are latched into row address buffers 150 (Fig. 7), which have outputs that connect to row decoder 154. After a short time, as determined by clock generator 152, row decoder 154 will have one of its 1,024 outputs go high. All of the 1,024 bits connected to the selected row will be connected to the 1,024 sense amplifiers 124, which sense the logic levels of the bits. A refresh of each of the bits is done if there has been any charge leakage. Sense amplifiers 124 require a timing signal that is supplied by clock generator 152.

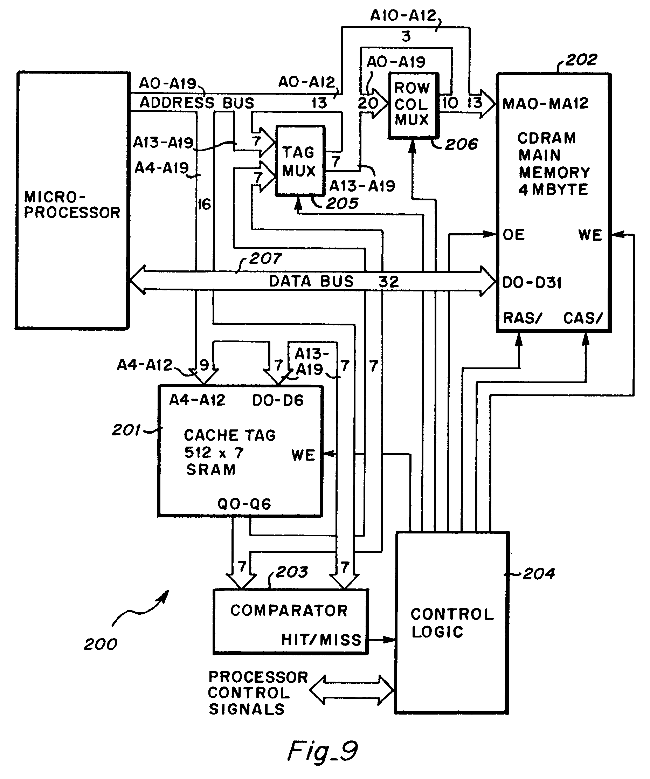

On the falling edge of CAS/, about twenty nanoseconds after RAS/ goes low, the address inputs MA0-MA12 are valid and equal to A0-A12, and a positive pulse CASP is generated by one-shot 140. In Fig. 8 this causes AND-gate 162 to have a positive output, which turns on transistors 182 for the selected line in the selected SRAM block 122. This selected line will have its transistors 181 on, and this line will read the outputs of the block's sixteen associated sense amplifiers 124, with the previous contents of the selected line overwritten. CASP will normally last a very short time, about 10-twenty nanoseconds, and during this time the address inputs should be held stable. This activity mimics transferring a line of DRAM to cache in a prior art system. A system, as shown in Fig. 9, has 32 CDRAMs 120 working in parallel, each one with a 16-bit line. So sixty-four bytes (16 x 32/8 = 64) are transferred.

Refer now to a system 200 in Fig. 9 that is comprised of CDRAMs 120. When a selected line of 16-bits is transferred from sense amplifiers 124 to the SRAM cells in blocks 122, an external tag memory 201 will also have to be updated to store the address that the line came from. As shown in Fig. 9, this tag SRAM has address inputs A4-A12 to address 512 words (2⁹ = 512). Each word stores a 7-bit address A13-A19. The (512 x 7) SRAM here is larger than that needed for CDRAM chip 60, but is still very modest.

In CDRAM chip 120, while CAS/ is low, any of the 8,192 SRAM data bits (8 x 1,024 = 8,192) can be read out with block selector 130, line selector 126, and 16:1 selector 134. These selectors are responsive to the low order address bits A0-A12. But before reading one of the bits, the line address A4-A12 must be sent to tag memory 201 (Fig. 9). Tag memory 201 output; Q0-Q6, will be compared in a comparator 203 to the current high order address bits A13-A19. If these match there is a read "hit", and the control logic will Output Enable CDRAM chip 120 onto one bit of the 32-bit data bus, resulting in a very short read access time.

If tag memory 201 output, Q0-Q6, does not match A13-A19 then there is a read miss. For a read miss, the external control logic is such that CAS/ and RAS/ go high, the tag MUX 205 selects tag memory 201 output to go to row/column MUX 106, and row/column MUX 106 is toggled to select rows. Then RAS/ goes low and a 1,024 bit row of CDRAM chip 120 is selected as determined by the tag output Q0-Q6 plus A10-A12, and after a short time sense amplifiers 124 have at their outputs the selected row data. Then WE/ goes low, which according to the logic shown in Fig. 7, will make W2 go high, when CAS/ is high. The SRAM block 122 logic is such that when W2 goes high, the selected SRAM line, determined by A4-A12, writes its 16-bits to the associated 16-bits of sense amplifier, which, in turn, will write their data into the bits of the row selected by Q0-Q6 plus A10-A12. Next RAS/ goes high, tag MUX 205 selects the current A13-A19 to go to a row/column MUX 206, and row/column MUX 206 is toggled to select rows. Then RAS/ goes low again, and a row of CDRAM chip 120 is selected by A10-A19 to be fed to sense amplifiers 124. About twenty nanoseconds after RAS/ goes low, CAS/ will go low and transfer 16-bits of data to the SRAM line determined by A4-A12, and finally the desired CDRAM chip 120 output can be enabled onto the 32-bit external bus. All of this takes about two normal DRAM cycles, and is much slower than for a read hit; however, sixty-four bytes of SRAM have been written to DRAM, and sixty-four bytes of DRAM have been written to SRAM.

In CDRAM chip 120, while CAS/ is low, any of the 8,192 SRAM bits can be written to by selection with the block selector 130, line selector 126, and the 16:1 selector 134, where these selectors are toggled by the address A0-A12. Again, however, before writing one of these bits, the line address A4-A12 must be sent to tag memory 201. Tag memory 201 output, Q0-Q6, will be compared to high address bits A13-A19. If these match, there is a write "hit". This will be detected by the control logic, which will cause WE/ to go low, and W1 to go high, which will turn on transistor 129 in Fig. 7. And, for a selected line, will turn on transistors 183 and turn off transistors 184 of Fig. 8. Only one of the data lines D1 through D16 will be at a low impedance as determined by the 16:1 selector 134, and it will be this line that will write Input Data to the selected SRAM bit. This will be a very short write access time.

When attempting to write, if tag memory 201 output, Q0-Q6, does not match A13-A19 then there is a write miss. For a write miss the external control 104 logic, is such that CAS/ and RAS/ go high, the tag MUX 205 selects tag memory 201 output to go to row/column MUX 206, and row/column MUX 206 is toggled to select rows. Then RAS/ goes low and a 1,024 bit row of CDRAM chip 120 is selected as determined by the tag cache 201 output Q0-Q6 plus A10-A13, and after a short time sense amplifiers 124 have at their outputs the selected row data. Then WE/ goes low, which according to the logic shown in Fig. 9, will make W2 go high, when CAS/ is high. When W2 goes high, the SRAM line, determined by A4-A12, writes its 16-bits to the associated 16-bits of sense amplifier, which, in turn, will write their data into the bits of the row selected by Q0-Q6 plus A10-A13. Next RAS/ goes high, the tag MUX 205 selects the current A13-A19 to go to row/column MUX 206, and row/column MUX 206 is toggled to select rows. Then RAS/ goes low again, and a row of CDRAM chip 120 is selected by A10-A19 to be fed to sense amplifiers 124. About twenty nanoseconds after RAS/ goes low, CAS/ will go low and transfer 16-bits of data to the SRAM line selected by A4-A12, and finally, after a short wait, the WE/ signal can be driven low and the data input can be written to the bit selected by A0-A12. Again, all this takes about two DRAM cycles, in which sixty-four bytes have been transferred twice.

The system of CDRAMs 120 described above has 32,768 bytes (8192 words x 32 bits) of data cache SRAM. It transfers lines of sixty-four bytes. Turning to Fig. 2, this system should have a hit rate equivalent to a prior art memory system with a data cache of 262,144 bytes (8 x 32,768 = 262,144), with a line of four bytes.

The above system of CDRAMs 120 is cache type known as direct mapped, because for every line address, A4-A12, there is only one tag address, and A13-A19 are stored in tag memory 201.

### Third Embodiment

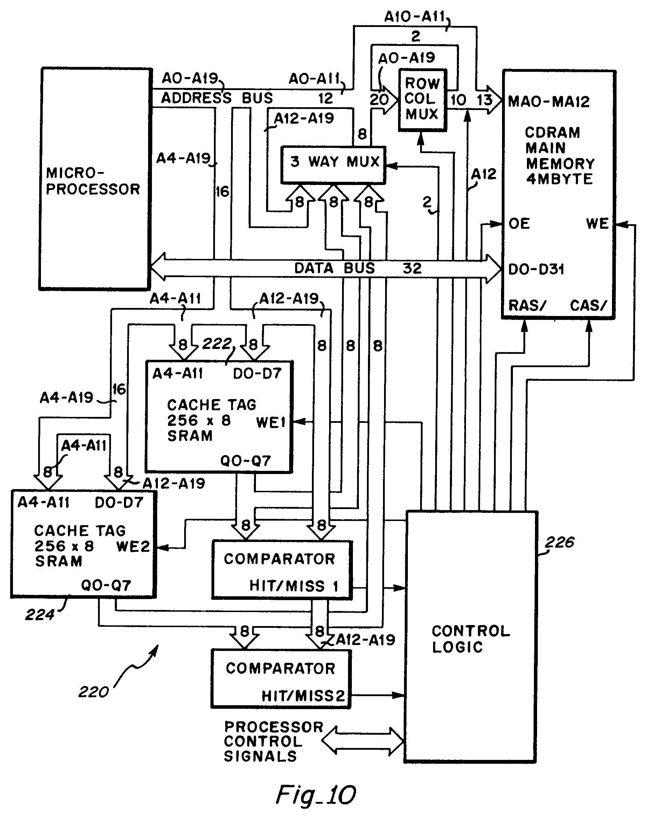

Fig. 10 is a four megabyte memory system 220, according to a third embodiment of the present invention. Every line address of A4-A11, has two tag addresses A12-A19. System 220 is comprised of thirty-two CDRAMs 120, and is a two way set associative type. The system has about the same number of tag SRAM bits as system 100, but there are two separate (256 x 8) tag memories 222 and 224 that are accessed in parallel. The data cache SRAM on each CDRAM chip 120 chip can be thought of as two banks of memory, each addressed by A4-A11. One or the other bank of which is selected by bit supplied by a control logic 226, which is more complicated than its counterparts described above. But configured this way, system 220 will give a higher hit rate than a direct mapped system, e.g., systems 100 and 200.

Four way and eight way set associative systems are also desirable. Set associative designs can be simplified if the tag memories, comparators, MUXs and control logic are all integrated together on one or a few chips. This would be practical, since the number of tag bits would be very modest, by prior art standards.

Although the present invention has been described in terms of the presently preferred embodiments, it is to be understood that the disclosure is not to be interpreted as limiting. Various alterations and modifications will no doubt become apparent to those skilled in the art after having read the above disclosure. Accordingly, it is intended that the appended claims be interpreted as covering all alterations and modifications as fall within the true spirit and scope of the invention.

## Claims

1. A memory system, comprising:
a first array of a first type of memory cells having a first access speed, the first array having dimensions "M" by "N" with each dimension being an integer number greater than one;
a second array of a second type of memory cells having a second access speed, said second access speed being substantially faster than said first access speed, the second array having dimensions "N" by "P", with dimension "P" being an integer number not less than one;
first transfer means to write "N" number of bits of data in parallel from the second array to the first array; and
second transfer means to write "N" number of bits of data in parallel from the first array to the second array.

2. The system of claim 1, further comprising:
cache tag means (101, 201) for storing the identity of a plurality of lines of data "N" bits wide that exist in the second array; and
comparator means (103, 203) for determining whether or not an eternal memory access request matches the identity any of said lines of data stored in the cache tag means (101, 201), the comparator (103, 203) having an output to signal a "hit" if a match is found and an output to signal a "miss" if no match is found.

3. The system of claim 2, further comprising:
control means (104, 204) for activating the first transfer means to be followed by an activation of the second transfer means when the comparator means (103, 203) outputs a "miss".

4. The system of claim 3, wherein:
the first and second transfer means interact with lines of memory cells in the first array that are not the same.

5. The system of claim 4, wherein:
the first transfer means flushes a line of data previously identified in said cache tag means (101, 201); and
the second transfer means fetches a line of data to be thereafter identified in said cache tag means (101, 201).

6. The system of claim 1, further comprising:
data selection means (64, 65) for transferring less than "N" number of bits in response to an external memory access request.

7. The system of claim 1, wherein:
first and second arrays and first and second transfer means are simultaneously disposed within a single semiconductor chip.

8. The system of claim 6, wherein:
integer "P" is equal to one; and
the data selection means selects one of "N" number of data line bits in the second array.

9. A cache memory system (60), comprising:
a first array of DRAM memory cells (77) having a first access speed, the first array having dimensions "M" by "N" with each dimension being an integer number greater than one;
a second array of SRAM memory cells (61) having a second access speed, said second access speed being substantially faster than said first access speed, the second array having dimensions "N" by "P", with dimension "P" being an integer number not less than one; first transfer means to write "N" number or bits of data in parallel from the second array to the first array, the first transfer means flushes a line of data previously identified in said cache tag means;
second transfer means to write "N" number of bits of data in parallel from the first array to the second array, the first and second transfer means interact with lines of memory cells in the first array that are not the same, the second transfer means fetches a line of data to be thereafter identified in said cache tag means (101);
cache tag means (101) for storing the identity of a plurality of lines of data "N" bits wide that exist in the second array (61);
comparator means (103) for determining whether or not an external memory access request matches the identity any of said lines of data stored in the cache tag means (101), the comparator (103) having an output to signal a "hit" if a match is found and an output to signal a "miss" if no match is found;
control means (104) for activating the first transfer means to be followed by an activation of the second transfer means when the comparator means (103) outputs a "miss"; and
data selection means (64, 65) for transferring less than "N" number of bits in the second array in response to an external memory access request.

10. The system of claim 9, wherein:
integers "M" and "N" are both equal to a power of two.

11. A memory system (200) having a plurality of memory chips (120), each chip comprising:
a first array of dynamic memory cells (150) with a first access speed, said first array having dimensions of "M" rows of bits by "N" columns of bits, said "M" and said "N" numbers being positive integers;
a second array off static memory cells (122) having a second access speed that is substantially faster than said first access speed, the second array having dimensions of "P" rows of bits by "N" columns of bits, said "P" number being a positive integer less than said "M" number; and
first transfer means for writing a line "K" bits long in parallel from the second array to the first array, said "K" being an integer and a fractional part of an addressed row of "N" bits; and
second transfer means for writing a line "K" bits long in parallel from the first array to the second array.

12. The system of claim 11, further comprising:
cache tag means (201) for storing a code responsive to the source addresses in the first array of a plurality of lines of data "K" bits wide that are duplicated in the second array; and
comparator means (203) for determining whether or not an external memory access request matches said address code of any of said lines of data stored in the cache tag means (201), the comparator (203) having an output to signal a "hit" if a match is found and an output to signal a "miss" if no match is found.

13. The system of claim 12, further comprising:
control means (204) for activating the first transfer means to be followed by an activation of the second transfer means when the comparator means outputs a "miss"

14. The system of claim 13, wherein:
the first and second transfer means operate on lines of memory cells in the first array representing copies of different parts of the first array.

15. The system of claim 14, wherein:
the first transfer means writes a line of data previously identified in said cache tag means (201) such that a representative part of the first array is updated; and
the second transfer means copies a line of data represented in the first array to be thereafter identified by address code in said cache tag means (201).

16. The system of claim 11, further comprising:
data selection means (130, 126, 134) for transferring at least one bit and less than "K" number of bits in response to an external memory access request.

17. The system of claim 11, wherein:
first and second arrays and first and second transfer means are integrated within a single semiconductor chip.

18. The system of claim 16, wherein:
integer "P" is equal to one; and the data selection means selects one of "K" number of data line bits in the second array.
